# EUROPEAN PATENT APPLICATION

(11) **EP 1 617 089 A2**
(43) Date of publication of application: **18.01.2006**
(21) Application number: 05015145.5
(22) Date of filing: 12.07.2005
(51) Int. Cl.: F16C 29/06, F16C 33/58

(54) **Linear guide apparatus**

(30) Priority: 13.07.2004 JP 2004205834
(71) Applicant: NSK Ltd., Shinagawa-ku, Tokyo (JP); NSK Precision Co., Ltd., Shinagawa-ku Tokyo (JP)
(72) Inventor: Nakano, Kenta, Maebashi-shi Gunma (JP)
(74) Representative: Grünecker, Kinkeldey, Stockmair & Schwanhäusser Anwaltssozietät

(57) **Abstract**

A linear guide apparatus has a rail having a rail side rolling element raceway groove, a slider having a slider side rolling element raceway groove, pluralities of rolling elements disposed between the rail and the slider, a rolling element return path in the slider, a curved path in an end cap attached to both ends of the slider and a crowning portion provided at both ends of the slider side rolling element raceway groove and having an effective crowning part like a curved surface and extending continuously from the slider side rolling element raceway groove and an out-of-effective crowning part (26,28) like a curved surface and extending continuously from the effective crowning part, wherein the effective crowning part has a larger curvature radius so that a slope thereof is gentle, while the out-of-effective crowning part (28) has a curvature radius smaller than that of the effective crowning part (26).

## Description

The present invention claims foreign priority to Japanese patent application no. P.2004-205834, filed on July 13, 2005, the contents of which is incorporated herein by reference.

### BACKGROUND OF THE INVENTION

### 1. Field of the Invention

The present invention relates to a linear guide apparatus having a crowning portion provided at each of both ends of a slider side rolling element raceway groove constituting a rolling element rolling path.

### 2. Description of the Background Art

A linear guide apparatus is adapted to linearly guide a guided object by endlessly circulating rolling elements, such as rollers or balls. It is an important machine element having a substantial impact on the movement precision of semiconductor manufacturing apparatuses,ultraprecision processing machines, and ultraprecision measuring apparatuses.

The linear guide apparatus has a guide rail, which is provided with a rail side rolling element raceway groove, and also has a slider body that is provided with a slider side rolling element raceway groove opposed to the rail side rolling element raceway groove and that is supported by the guide rail to be enabled to axially move through the rolling of plural rolling elements disposed in a rolling element rolling path formed between the slider side rolling element raceway groove and the rail side rolling element raceway groove. This apparatus also has a rolling element returning path, which is provided in the slider body substantially in parallel to the rolling element rolling path, and curved paths that are provided in end caps attached to both ends in the moving direction of the slider body and that communicate the rolling element rolling path with the rolling element returning path.

When the rolling element of the linear guide apparatus is endlessly circulated in the rolling element rolling path, the curved paths and the rolling element returning path, periodical minute vibrations (hereunder referred to as rolling element passing vibrations) are generated. The periodical minute vibrations largely affect the movement precision of the aforementioned apparatuses. The periodical minute vibrations are generated by releasing a load when the rolling element goes out of a loaded area to rolling element circulating path (that is, an unloaded area) while rolling in the rolling element rolling path (that is, the loaded area) under the load due to preloading or to external loading, or conversely, by undergoing a load when the rolling element goes into the loaded area from the unloaded area.

To suppress this rolling element passing vibrations, the crowning portions are provided at both ends of the slider side rolling element raceway groove constituting the rolling element rollingpath. Thus, a load change, which occurs when the rolling element goes into or out of the loaded area, is gradually caused. Consequently, the rolling element passing vibrations can be reduced.

Generally, the crowning portion is shaped like an arc or like a line. However, for example, according to a linear guide apparatus of Japanese Patent Unexamined Publication JP-A-2003-35314, the shape of the crowning portion is set so that the stiffness in one of a perpendicular or vertical direction, a horizontal direction, and a rolling direction of the slider body is maintained substantially at a constant value, and that the stiffness in one or both of a pitching direction and a yawing direction of the slider body is maintained substantially at a constant value. Thus, an amount of elastic deformation caused in the rolling element in the rolling element rolling path and the rolling element returning path is substantially constant. Consequently, the generation of the rolling element passing vibrations at movement of the slider body is suppressed.

Meanwhile, the longer the crowning length becomes, the effects of reducing the rolling element passing vibrations are enhanced. The larger a crowning amount becomes, the more largely the noises and the vibrations can be reduced in a high load mode in which a large load is applied to the slider body, or in a case where a large mounting error is caused by prizing or the like.

However, when the crowning length or the crowning amount is increased, the number of the rolling elements undergoing the load in the rolling element rollingpath is decreased. Thus, the stiffness and the load carrying capacity thereof is reduced. Consequently, even in the case of the apparatus disclosed in the JP-A-2003-35314, in the high load mode, or in the case where a large mounting error is caused, it is difficult to ensure the stiffness while reducing the noises and the vibrations.

### SUMMARY OF THE INVENTION

The present invention is accomplished to solve such a problem. An object of the invention is to provide a linear guide apparatus having crowning portions enabled to reduce the rolling element passing vibrations and the noises and vibrations generated in the high load mode or in the case that.a large mounting error is caused.

To solve the problems, according to a first aspect of the present invention, there is provided a linear guide apparatus, comprising:
a guide rail having a rail side rolling element raceway groove provided in a side surface thereof extending along an axial direction thereof;
a slider body having a slider side rolling element raceway groove opposed to the rail side rolling element raceway groove;
pluralities of rolling elements disposed in a rolling element rollingpath formed between the rail side rolling element raceway groove and the slider side rolling element raceway groove;
a rolling element return path provided in the slider body substantially in parallel to the rolling element rolling path;
a curved path provided in an end cap attached to both ends of a moving direction of the slider body and communicating the rolling element rolling path with the rolling element returning path; and
crowning portions provided at both ends of the slider side rolling element raceway groove, the crowningportion including:
   an effective crowning part being shaped like a curved surface and extending continuously from the slider side rolling element raceway groove and undergoes a load through the rolling element; and
   an out-of-effective crowning part being shaped like a curved surface and extending continuously from the effective crowning part to an end face of a bearing block,
wherein the slider body is supported by the guide rail via the rolling elements so as to move in an axial direction, and
the effective crowning part has a relatively large curvature radius so that a slope thereof is gentle, while the out-of-effective crowning part has a curvature radius smaller than that of the effective crowning part.

According to a second aspect of the present invention, as set forth in the first aspect of the present invention, it is preferable that a maximum crowning amount of the effective crowning part is set to be almost equal to an amount of change of elastic deformation of the rolling element, which is caused by preloading; and
a length of the effective crowning part is set to be equal to or more than 0.5 times a distance between adjacent ones of the rolling elements.

According to a third aspect of the present invention, as set forth in the first aspect of the present invention, it is preferable that a maximum crowning amount of the effective crowning part is set to be equal to or less than 0.3 % of a diameter of the rolling element and
a length of the effective crowning part is set to be equal to or more than 0.5 times a distance between adjacent ones of the rolling elements.

According to a fourth aspect of the present invention, as set forth in the first aspect of the present invention, it is preferable that a maximum crowning amount of the out-of-effective crowning part is set to be almost equal to an amount of elastic deformation of the rolling element, which is caused by applying a load thereto and
a length of the out-of-effective crowning part is set to be equal to or more than 3 times a maximum crowning amount of the out-of-effective crowning part.

According to a fifth aspect of the present invention, as set forth in the first aspect of the present invention, it is preferable that a maximum crowning amount of the out-of-effective crowning part is set to be equal to or less than 0.15 % of a diameter of the rolling element and
a length of the out-of-effective crowning part is set to be equal to or more than 3 times a maximum crowning amount of the out-of-effective crowning part.

According to a sixth aspect of the present invention, as set forth in the first aspect of the present invention, it is preferable that the crowning portion shaped like a single curve is formed by performing curve fitting on an initial coordinate of the effective crowning part,
a boundary coordinate of a boundary between the effective crowning part and the out-of-effective crowning part, and
a terminal coordinate of the out-of-effective crowning part by utilizing curve approximation.

According to the linear guide apparatus of the invention, the crowning portion comprises an effective crowning part, which extends continuously from the slider side rolling element raceway groove, and an out-of-effective crowning part that extends continuously from the effective crowning part to a inner peripheral side circulating groove of a rolling element circulating path. The effective crowning part is formed to have a relatively large curvature radius so that a slope thereof is gentle, while the out-of-effective crowning part is formed to have a curvature radius smaller than that of the effective crowning part. Thus, the invention can reduce extreme noises and vibrations generated in a high load mode or in a case where a large mounting error is caused. Also, the invention can alleviate stress concentration occurring in the end surface of the slider body. Consequently, the invention can obtain an advantage in the life of the apparatus.

Also, the effective crowning part is formed to have a relatively large curvature radius so that a slope thereof is gentle. The effective crowning length thereof is set to be long. Thus, the effect of reducing the rolling element passing vibration can be enhanced.

### BRIEF DESCRIPTION OF THE DRAWINGS

Fig. 1 is a perspective view illustrating a linear guide apparatus according to the invention;
Fig. 2 is a view illustrating the inner structure of a slider body of the linear guide apparatus;
Fig. 3 is a view illustrating a crowning portion provided at a longitudinal end portion of the slider body;
Fig. 4 is a view illustrating an effective crowning part and an out-of-effective crowning part, which constitute a crowning portion according to the invention;
Fig. 5 is a graph illustrating the relation between a load, which acts on the linear guide apparatus, and an amount of elastic deformation of a rolling element;
Fig. 6 is a graph illustrating the relation among a vertical rolling element passing vibration, which is generated in the linear guide apparatus, an effective crowning length of the effective crowning part, and an inter-rolling element distance (that is, the relation between the centers of adjacent rolling elements);
Fig. 7 is a graph illustrating the relation between the crowning amount and the crowning length of each of the effective crowning part and the out-of-effective crowning part of a first embodiment according to the invention; and
Fig. 8 is a graph illustrating the relation between the crowning amount and the crowning length of each of the effective crowning part and the out-of-effective crowning part of a second embodiment according to the invention.

### DETAILED DESCRIPTION OF THE PREFERRED EMBODIMENTS

Embodiments of a linear guide apparatus according to the invention are described hereinbelow with reference to the accompanying drawings.

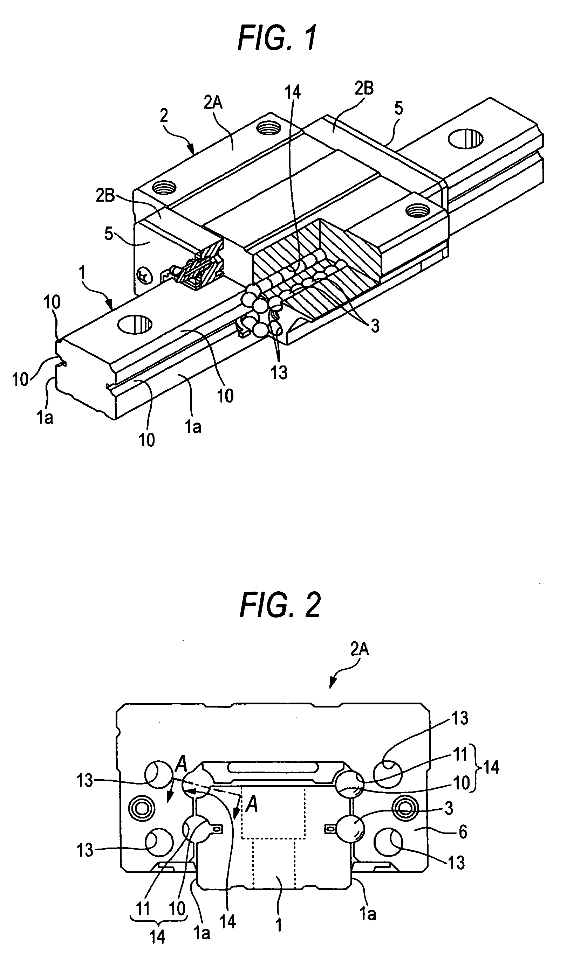

Fig. 1 shows an external view of a linear guide apparatus according to the invention. In this linear guide apparatus, a portal shaped slider 2 is assembled onto a guide rail 1 so that the slider 2 can move thereon. A rolling element raceway groove 10 comprising a substantially cross-sectionally quarter-arc-shaped concave groove is formed in a ridge portion in which the top surface of this guide rail 1 intersects with a side surface 1a thereof. Rolling element raceway grooves 10 each comprising a nearly cross-sectionally semicircular concave groove extending axially are formed at intermediate positions of each of both side surfaces 1a of the guide rail 1.

The slider 2 comprises a bearing block 2A, which constitutes the body of the slider 2, and portal-shaped end caps 2B detachably attached to both axial end portions thereof. Also, a side seal 5 adapted to seal an opening, which is the clearance between the guide rail 1 and the slider 2, is attached to each of both the end portions (that is, the end surface of each of the end caps 2B) of the slider 2.

As shown in Fig. 2, a cross-sectionally semicircular roll ing element raceway groove 11 opposed to the rolling element raceway is formed at each of the corner portions of the inner surfaces of both sleeve portions 6 of the bearing block 2A. A nearly cross-sectionally semicircular rolling element raceway groove 11 opposed to the rolling element raceway groove 10 of the guide rail 1 is formed at the central portion of the inner surface of each of both the sleeve portions 6.

Four rolling element rolling paths 14 are constituted by the rolling element raceway grooves 10 of the guide rail 1 and the rolling element raceway groove 11 of both sleeve portions 6 of the bearing block 2A. These rolling element rolling paths 14 extend in the axial direction. The slider 2 has rolling element returning paths 13 constituted by cross-sectionally circular through holes axially penetrating through the upper and lower parts of thick portions of the sleeve portions 6 of the bearing block 2A inparallel with the rolling element rolling path 14.

The end cap 2B has curved paths respectively communicating between the associated rolling element rolling path 14 and the associated rolling element returning path 13. The curved paths are adapted to feed the rolling element 13 from the terminal point of the rolling element rolling path 14 to the initial point of the rolling element returning path 13, or adapted to feed the rolling element 13 from the terminal point of the rolling element returning path 13 to the initial point of the rolling element rolling path 14.

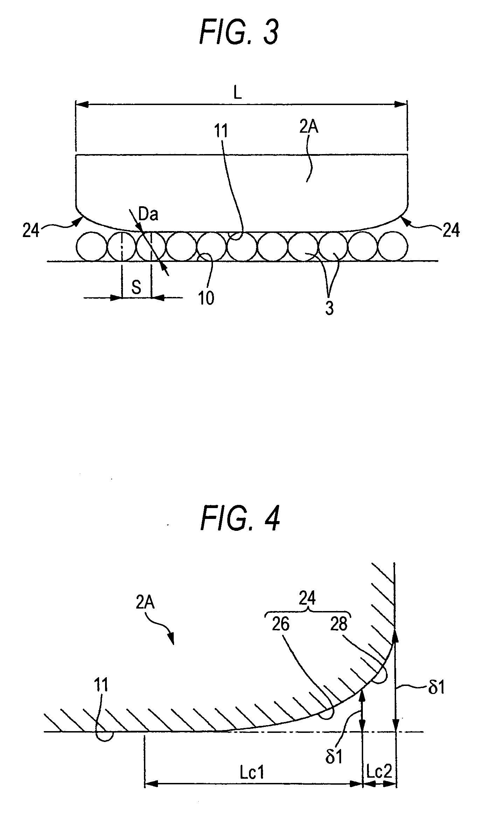

Fig. 3 is a view taken in the direction of an arrow along line A-A shown in Fig. 2, which extends in the direction of an angle of contact between the rolling element raceway grooves 10 and 11 constituting the rolling element rolling paths 14. A crowning portion 24 extending continuously from the rolling element raceway groove 11 is provided at each of both ends of the bearing block 2A.

As shown in Fig. 4, this crowningportion 24 has an effective crowning part 26, which is shaped like a curved surface and extends continuously from the rolling element raceway groove 11, and an out-of-effective crowning part 28 that is shaped like a curved surface and extends continuously from this effective crowning part 26 to an end surface of the bearing block 2A.

Incidentally, σ1 denotes a maximum crowning amount of the effective crowning part 26. Lc1 designates an effective crowning length of the effective crowning part 26. σ2 denotes a maximum crowning amount of the out-of-effective crowning part 28. Lc2 designates an effective crowning length of the out-of-effective crowning part 28.

Next, a first embodiment of the invention is described hereinbelow.

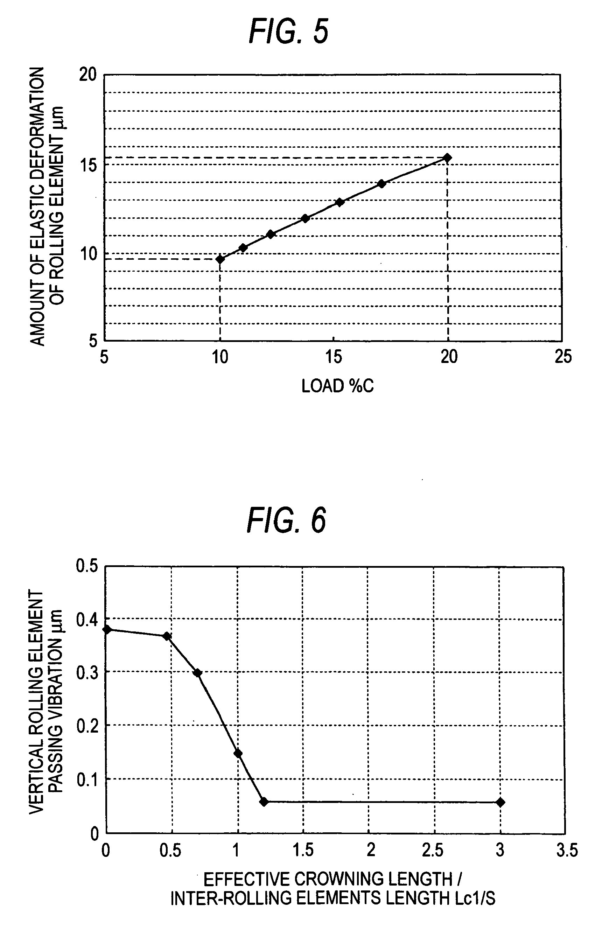

In this embodiment, actual values of the maximum crowning amounts σ1 and σ2 and the effective crowning length Lc1 and Lc2 are set according to FigS. 5 and 6. Incidentally, in the linear guide apparatus of this embodiment, the axial length L of the bearing block 2A shown in Fig. 3 is set at 50mm. The diameter Da of the rolling element 3 is set at 3.96875mm. The dynamic load rating C thereof is set at 16300N. The preload thereof is set at 1630N, which is 10% of the dynamic load rating C.

Fig. 5 is a graph illustrating the relation between a load (in percentage terms with respect to the dynamic load rating C), which acts on the linear guide apparatus, and an amount of elastic deformation of the rolling element 3. As is seen from this graph, when the preload (10%C) acts, the amount δ1 of elastic deformation of the rolling element 3 is about 0.010mm (about 10µm), and the maximum crowning amount σ1 of the effective crowning part of this embodiment is set at the amount δ1 of elastic deformation of the effective crowning part 26 of this embodiment (the amount δ1 is nearly equal to 0.010mm), which is obtained when the preload acts.

As is seen from Fig. 5, when the load, whose value is 20% of the dynamic load rating C, acts, the amount δ2 of elastic deformation of the rolling element 3 is about 0.015mm (that is, about 15µm), and the maximum crowning amount σ2 of the out-of-effective crowning part 28 of this embodiment is set to be equal to the amount δ2 of elastic deformation of the rolling element 3 (the amount δ2 is nearly equal to 0.015mm), which is obtained when the load, whose value is 20% of the dynamic load rating C, acts.

Fig. 6 is a graph illustrating the relation among a vertical rolling element passing vibration, which is generated in the linear guide apparatus, an effective crowning length Lc1 of the effective crowning part 26, and an inter-rolling element distance S (that is, the relation between the centers of adjacent rolling elements 3) . This graph reveals that when Lc1/S exceeds 0.5, the vertical rolling element passing vibration lowers, and that when Lc1/S is equal to or larger than 1.2, the vertical rolling element passing vibration has the lowest value.

Thus, in this embodiment, the effective crowning length Lc1 of the effective crowning part 26 is set to be 1.2 times the inter-rolling element distance S.

Usually, it is necessary that the length Lc2 of the out-of-effective crowning part 28 is equal to or larger than 3 times the amount δ2 of elastic deformation of the rolling element 3, which is used for setting the maximum crowning amount σ2 of the effective outer crowning portion 28. In this embodiment, the length Lc2 of the out-of-effective crowning part 28 is set to be 30 times the amount σ2 (that is, Lc2 = 30 x δ2).

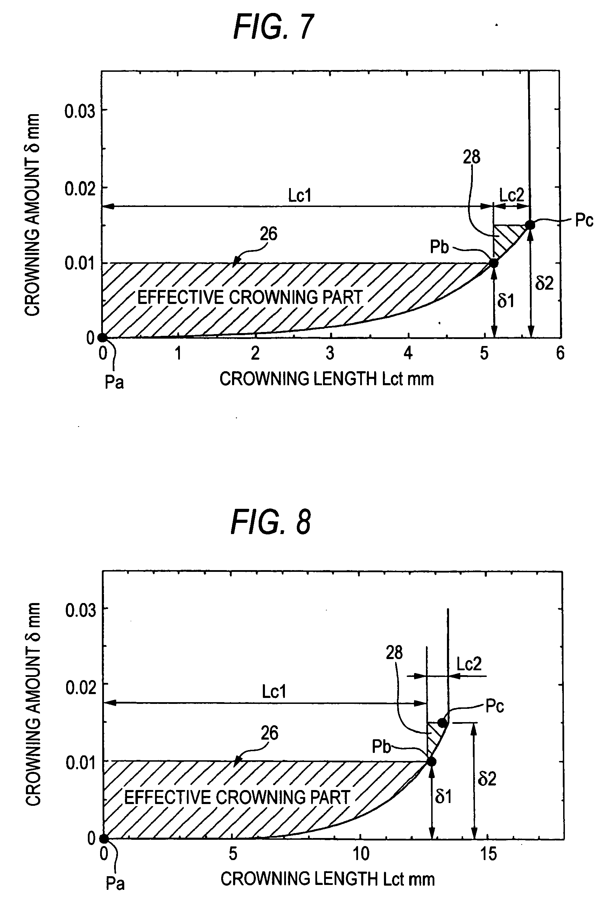

As shown in Fig. 7, curve fitting is performed on an initial coordinate Pa of the effective crowning part 26, a boundary coordinate Pb of the boundary between the effective crowning part 26 and the out-of-effective crowning part 28, and a terminal coordinate Pc of the out-of-effective crowning part 28 by utilizing curve approximation using an exponential function. Thus, the crowning portion 24 comprising the effective crowning part 26 and the out-of-effective crowning part 28 is cross-sectionally shaped like a single curve.

According to this embodiment, the maximum crowning amount is set at about 0.015mm (the maximum crowning amount σ2 of the out-of-effective crowning part 28 is nearly equal to 0.015mm). Thus, the amount of elastic deformation of the rolling element, which amount corresponds to the load being equal to 20% of the dynamic load rating C, which is a general application limit, can be absorbed to thereby enhance the movement precision of the rollingelement 3. Consequently, this embodiment can reduce extreme noises and vibrations generated in a high load mode or in a case where a large mounting error is caused. Also, this embodiment can alleviate stress concentration occurring in the end surface of the bearing block 2A. Thus, this embodiment has an advantage in the life of the apparatus.

Also, according to this embodiment, the effective crowning length Lc1 of the effective crowning part 26 is set to be long and to be 12 times the inter-rolling element distance S. Thus, the effect of reducing the rolling element passing vibrations can be enhanced.

Incidentally, the length Lc2 of the out-of-effective crowning part is about 1.8 % of the axial length of the bearing block 2A even in a case where the lengths of both end surface portions of the bearing block are added to the length Lc2. Thus, the length Lc2 of the out-of-effective crowning part has little influence on the stiffness and the dynamic load rating thereof.

Also, the crowning portion 24 is cross-sectionally shaped like a single curve by performing curve-fitting utilizing curve approximation that uses an exponential function. Thus, the stiffness can be ensured while the rolling element passing vibrations are reduced by utilizing the effective crowning part 26 that is cross-sectionally shaped like a gently sloping curve. On the other hand, a sufficient crowning amount can be ensured by utilizing the out-of-effective crowning part 28 that is cross-sectionally shaped like a relatively steep curve. Consequently, an abrupt load change caused on the end surfaces of the bearing block in a high load mode or in a case where a large mounting error is caused. Consequently, noises and vibrations can be reduced.

Incidentally, in this embodiment, the maximum crowning amount σ1 of the effective crowning part 26 is set to be nearly equal to the amount δ1 of elastic deformation of the rolling element, which is caused when the preload acts thereon. However, in consideration of influence on the life of the linear guide apparatus, the maximum value of the preload is set in such a way as not to exceed 15% of the dynamic load rating C. The amount δ1 of elastic deformation of the rolling element, which is caused when the preload, whose value is 15% of the dynamic load rating C, acts thereon, is equivalent to 0.3 % or less of the diameter Da of the rolling element 3.

Therefore, this embodiment can obtain the aforementioned advantages even when the maximum crowning amount σ1 of the effective crowning part 26 is equal to or less than 0.3 % of the diameter Da of the rolling element 3.

Also, it is necessary that the maximum crowning amount (or depth) σ2 of the out-of-effective crowning part 28 is sufficient to absorb the elastic deformation of the rolling element 3, which is caused by the load. Incidentally, when the maximum crowning amount σ2 is extremely large, the stiffness and the life of the linear guide apparatus are lowered. Thus, in a case where the ordinarily assumed maximum value of the load is set to be twice the dynamic load rating C, the amount δ2 of elastic deformation is equivalent to 0.15% or less of the diameter Da of the rolling element 3.

Therefore, this embodiment can obtain the aforementioned advantages even when the maximum crowning amount σ2 of the out-of-effective crowningpart 28 is equal to or less than 0.15 % of the diameter Da of the rolling element 3.

Next, a second embodiment according to the invention is described hereinbelow with reference to Fig. 8.

In this embodiment, the relation between the effective crowning length Lc1 of the effective crowning part 26 and the inter-rolling element distance S (that is, the distance between the centers of the adjacent rolling elements 3) is set to be Lcl/S = 3. As is apparent from Fig. 6, the vertical rolling element passing vibration has a minimum value even in the case that Lcl/S = 3.

In this embodiment, curve fitting is performed on an initial coordinate Pa of the effective crowning part 26, a boundary coordinate Pb of the boundary between the effective crowning part 26 and the out-of-effective crowning part 28, and a terminal coordinate Pc of the out-of-effective crowning part 28 by utilizing curve approximation using a power function. Thus, the crowning portion 24 is cross-sectionally shaped like a single curve.

According to this embodiment, the crowning portion 24 is shaped like a more gently sloping curve, as compared with the first embodiment shown in Fig. 7. Thus, the second embodiment can enhance the effects of reducing the rolling element passing vibration while the stiffness is ensured, and of reducing the noise and vibration in a high load mode and in a case where a large mounting error is caused.

Incidentally, although the crowning portion 24 is shaped like a single curve in the first and second embodiments by performing curve fitting utilizing curve approximation that uses an exponential function and a power function, respectively, the crowning portion 24 may be similarly shaped like a single curve by performing curve fitting utilizing curve approximation that uses a logarithmic function.

While there has been described in connection with the preferred embodiments of the present invention, it will be obvious to those skilled in the art that various changes and modification may be made therein without departing from the present invention, and it is aimed, therefore, to cover in the appended claim a11 such changes and modifications as fall within the true spirit and scope of the present invention.

## Claims

1. A linear guide apparatus, comprising:
a guide rail having a rail side rolling element raceway groove provided in a side surface thereof extending along an axial direction thereof;
a slider body having a slider side rolling element raceway groove opposed to the rail side rolling element raceway groove;
pluralities of rolling elements disposed in a rolling element rollingpath formedbetween the rail side rolling element raceway groove and the slider side rolling element raceway groove;
a rolling element return path provided in the slider body substantially in parallel to the rolling element rolling path;
a curved path provided in an end cap attached to both ends of a moving direction of the slider body and communicating the rolling element rolling path with the rolling element returning path; and
crowning portions provided at both ends of the slider side rolling element raceway groove, the crowning portion including:
an effective crowning part being shaped like a curved surface and extending continuously from the slider side rolling element raceway groove and undergoes a load through the rolling element; and
an out-of-effective crowning part being shaped like a curved surface and extending continuously from the effective crowning part to an end face of a bearing block,
wherein the slider body is supported by the guide rail via the rolling elements so as to move in an axial direction, and
the effective crowning part has a relatively large curvature radius so that a slope thereof is gentle, while the out-of-effective crowning part has a curvature radius smaller than that of the effective crowning part.

2. The linear guide apparatus according to claim 1, wherein
a maximum crowning amount of the effective crowning part is set to be almost equal to an amount of change of elastic deformation of the rolling element, which is caused by preloading; and
a length of the effective crowning part is set to be equal to or more than 0.5 times a distance between adjacent ones of the rolling elements.

3. The linear guide apparatus according to claim 1, wherein
a maximum crowning amount of the effective crowning part is set to be equal to or less than 0.3 % of a diameter of the rolling element and
a length of the effective crowning part is set to be equal to or more than 0.5 times a distance between adjacent ones of the rolling elements.

4. The linear guide apparatus according to claim 1, wherein
a maximum crowning amount of the out-of-effective crowning part is set to be almost equal to an amount of elastic deformation of the rolling element, which is caused by applying a load thereto and
a length of the out-of--effective crowning part is set to be equal to or more than 3 times a maximum crowning amount of the out-of-effective crowning part.

5. The linear guide apparatus according to claims 1, wherein
a maximum crowning amount of the out-of-effective crowning part is set to be equal to or less than 0.15 % of a diameter of the rolling element and
a length of the out-of-effective crowning part is set to be equal to or more than 3 times a maximum crowning amount of the out-of-effective crowning part.

6. The linear guide apparatus according to claim 1, wherein
the crowning portion shaped like a single curve is formed by performing curve fitting on an initial coordinate of the effective crowning part,
a boundary coordinate of a boundary between the effective crowning part and the out-of-effective crowning part, and
a terminal coordinate of the out-of-effective crowning part by utilizing curve approximation.
